# EUROPEAN PATENT APPLICATION

(11) **EP 4 804 458 A1**
(43) Date of publication of application: **09.09.2026**
(21) Application number: 24895681.5
(22) Date of filing: 24.07.2024
(51) Int. Cl.: H04L 9/32

(54) **MEDIA DATA TRANSMISSION METHOD, APPARATUS AND SYSTEM**

(30) Priority: 29.11.2023 CN 202311626620
(71) Applicant: Huawei Technologies Co., Ltd., Shenzhen, Guangdong 518129 (CN)
(72) Inventor: GENG, Feng, Shenzhen, Guangdong 518129 (CN); WANG, Zhiyuan, Shenzhen, Guangdong 518129 (CN)
(74) Representative: Goddar, Heinz J.
(86) International application number: PCT/CN2024/107339
(87) International publication number: WO 2025/112578

(57) **Abstract**

This application relates to the field of computer technologies, and provides a media data transmission method, apparatus, and system. A communication party serving as a transmit end signs fingerprint information of previously sent media data, includes a signature value in a digital watermark, and embeds the digital watermark into subsequently sent media data. A communication party serving as a receive end verifies, based on the fingerprint information of the previously received media data, the signature value in the subsequently received media data, to determine authenticity of the previously transmitted media data. Because the digital watermark is obtained based on the fingerprint information and the signature value of the media data, it is challenging for attackers to forge the digital watermark, so that media data can be securely transmitted between the two communication parties. In addition, the digital watermark generated based on the previously transmitted media data is embedded into the subsequently transmitted media data, so that smoothness and real-time performance of media data transmission can be achieved.

## Description

This application claims priority to Chinese Patent Application No. 202311626620.1, filed on November 29, 2023 and entitled "MEDIA DATA TRANSMISSION METHOD, APPARATUS, AND SYSTEM", which is incorporated herein by reference in its entirety.

### TECHNICAL FIELD

This application relates to the field of computer technologies, and in particular, to a media data transmission method, apparatus, and system.

### BACKGROUND

To implement secure data transmission, end-to-end encryption (end-to-end encryption, E2EE) is usually used for communication. The end-to-end encryption allows data to always exist in a form of ciphertext during transmission from a transmit end to a receive end.

However, even if an end-to-end encryption mechanism is used, some security risks may still exist during data transmission, for example, a "man-in-the-middle" attack. The man-in-the-middle (man-in-the-middle, MITM) attack is a type of active wiretapping attack where an attacker interposes itself between two communication parties and masquerades as one or more entities during data transmission, to intercept and tamper with data transmitted between the two communication parties. How to prevent the man-in-the-middle attack is particularly important for communication security, and is an important topic of current research.

### SUMMARY

This application provides a media data transmission method, apparatus, and system.

According to a first aspect, a media data transmission method is provided. A first communication party obtains first fingerprint information of first media data. The first communication party generates a first digital watermark based on the first fingerprint information, where the first digital watermark includes a first signature value obtained by the first communication party by signing a first authentication message with a target key, and the first authentication message includes the first fingerprint information. The first communication party sends the first media data and second media data to a second communication party, where the first digital watermark is embedded into the second media data, and the second media data is sent after the first media data.

In this application, the signature value in the digital watermark is obtained by computing the authentication message including the fingerprint information of the media data by the transmit end with the target key, where the fingerprint information can provide an identity credential for the media data, so that the generated digital watermark can be coupled with the media data to prevent malicious forgery; and the signature value can be used to determine authenticity of the media data and implement end-to-end authentication on the first media data. Attackers typically find it difficult to steal both the target key for generating the digital watermark and an algorithm for generating the digital watermark. Consequently, it is challenging for the attackers to forge the digital watermark to carry out undetected attacks. Therefore, the solution proposed in this application can allow the media data to be securely transmitted between the two communicating parties. In addition, in this application, the digital watermark generated based on the previously transmitted media data is embedded into the subsequently transmitted media data. In a real-time communication scenario, time consumed by the transmit end to compute the fingerprint, perform signing, and embed the digital watermark into the media data during generation of the digital watermark does not affect the previously transmitted media data, so that smoothness and real-time performance of media data transmission can be achieved. In addition, because the digital watermark is embedded into the subsequently transmitted media data, the embedded digital watermark does not affect fingerprint computation of the previously transmitted media data, thereby resolving a problem of irreversible rewriting of the current media data caused by embedding the digital watermark into the current media data.

Optionally, the target key is a private key held by the first communication party. When the target key is a private key held by the first communication party, the second communication party may verify, based on the first signature value, whether the first media data is from the first communication party and integrity of the first media data. Because the private key is usually kept within the device, any third party without the private key cannot forge the signature. When attackers find it difficult to obtain the private key held by the first communication party, it is challenging to forge the first digital watermark generated by the first communication party to carry out undetected attacks.

Alternatively, the target key is a session key obtained through negotiation between the first communication party and the second communication party. When the target key is a session key obtained through negotiation between the first communication party and the second communication party, the second communication party may verify, based on the first signature value, whether the first media data is from the first communication party and integrity of the first media data. Because any third party other than the first communication party and the second communication party finds it difficult to obtain the session private key through negotiation between the first communication party and the second communication party, it is challenging for attackers to forge the first digital watermark generated by the first communication party to carry out undetected attacks.

Alternatively, the target key is a shared key of a group to which the first communication party and the second communication party belong, where the shared key is obtained through negotiation among a plurality of communication parties in the group. When the target key is a shared key of the group, the second communication party may verify, based on the signature value, whether the first media data is from another communication party in the group and integrity of the first media data. Because any third party outside the group finds it difficult to obtain the shared key of the group, it is challenging for attackers to forge a digital watermark generated by a communication party in the group to carry out undetected attacks.

Optionally, the first media data is in a first media frame, the second media data is in a second media frame, and the second media frame is a media frame immediately following the first media frame.

In this application, the transmit end may embed a digital watermark generated based on a preceding media frame into a subsequent media frame, and a receive end checks the preceding media frame based on information about the subsequent media frame, to implement continuity check on media data.

Optionally, the first authentication message further includes authentication attribute information, and the first digital watermark includes the authentication attribute information and the first signature value.

Optionally, the first communication party generates a derived key by using a key derivation function and based on the shared key of the group to which the first communication party and the second communication party belong, an identity of the first communication party, and an identity of the second communication party, where the shared key is obtained through negotiation among the plurality of communication parties in the group. The first communication party uses, as the authentication attribute information, a hash value obtained by computing a plurality of identity public keys using the derived key, where the plurality of identity public keys include an identity public key of the first communication party and an identity public key of the second communication party.

In this application, authentication attribute information associated with identities of two communication parties is used to generate a digital watermark, so that authentication attribute information used by different communication parties may be different, to ensure uniqueness of the authentication attribute information, and facilitate subsequent source tracing and forensics based on the digital watermark.

Optionally, the first communication party obtains second fingerprint information of the second media data. The first communication party generates a second digital watermark based on the second fingerprint information, where the second digital watermark includes a second signature value obtained by the first communication party by signing a second authentication message with the target key, and the second authentication message includes the second fingerprint information. After sending the second media data to the second communication party, the first communication party sends third media data to the second communication party, where the second digital watermark is embedded into the third media data.

Optionally, the first media data and the second media data are audio data, video data, or file data.

According to a second aspect, a media data transmission method is provided. The method includes: The second communication party receives first media data and second media data that are sent by a first communication party, where the second media data is received after the first media data, a first digital watermark is embedded into the second media data, and the first digital watermark includes a first signature value. The second communication party obtains a first authentication message, where the first authentication message includes first fingerprint information of the first media data. The second communication party verifies the first signature value based on a target key and the first authentication message, to determine authenticity of the first media data.

Optionally, the target key is a public key held by the first communication party; the target key is a session key obtained through negotiation between the first communication party and the second communication party; or the target key is a shared key of a group to which the first communication party and the second communication party belong, where the shared key is obtained through negotiation among a plurality of communication parties in the group.

Optionally, the first digital watermark further includes authentication attribute information, and the first authentication message further includes the authentication attribute information.

Optionally, the second communication party receives third media data sent by the first communication party, where the third media data is received after the second media data, a second digital watermark is embedded into the third media data, and the second digital watermark includes a second signature value. The second communication party obtains a second authentication message, where the second authentication message includes second fingerprint information of the second media data. The second communication party verifies the second signature value based on the target key and the second authentication message, to determine authenticity of the second media data.

Optionally, the first media data and the second media data are audio data, video data, or file data.

According to a third aspect, a media data transmission apparatus is provided, where the apparatus may be used in a first communication party, and the apparatus may be, for example, a communication device of the first communication party. The apparatus includes a plurality of functional modules, and the plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided based on a specific implementation.

According to a fourth aspect, a media data transmission apparatus is provided, where the apparatus may be used in a second communication party, and the apparatus may be, for example, a communication device of the second communication party. The apparatus includes a plurality of functional modules, and the plurality of functional modules interact with each other to implement the method according to the second aspect and the implementations of the second aspect. The plurality of functional modules may be implemented based on software, hardware, or a combination of software and hardware, and the plurality of functional modules may be randomly combined or divided based on a specific implementation.

According to a fifth aspect, a media data transmission system is provided, including a first communication party and a second communication party. The first communication party is configured to perform the method according to the first aspect and the implementations of the first aspect, and the second communication party is configured to perform the method according to the second aspect and the implementations of the second aspect.

Optionally, both the first communication party and the second communication party are conference participants.

According to a sixth aspect, a communication device is provided, including a processor and a memory. The memory is configured to store a computer program, and the computer program includes program instructions. The processor is configured to invoke the computer program, to implement the method according to the first aspect and the implementations of the first aspect or the method according to the second aspect and the implementations of the second aspect.

According to a seventh aspect, a computer-readable storage medium is provided. The computer-readable storage medium stores instructions. When the instructions are executed by a processor, the method according to the first aspect and the implementations of the first aspect or the method according to the second aspect and the implementations of the second aspect is implemented.

According to an eighth aspect, a computer program product is provided, including a computer program. When the computer program is executed by a processor, the method according to the first aspect and the implementations of the first aspect or the method according to the second aspect and the implementations of the second aspect is implemented.

According to a ninth aspect, a chip is provided. The chip includes a programmable logic circuit and/or program instructions. When the chip runs, the method according to the first aspect and the implementations of the first aspect or the method according to the second aspect and the implementations of the second aspect is implemented.

### BRIEF DESCRIPTION OF DRAWINGS

FIG. 1 is a diagram of a man-in-the-middle attack according to an embodiment of this application;
FIG. 2 is a diagram of frame-based audio watermark embedding according to a related technology;
FIG. 3 is a diagram of an implementation of an audio watermarking algorithm according to a related technology;
FIG. 4 is a diagram of an implementation of an audio fingerprint algorithm according to a related technology;
FIG. 5 is a diagram of an implementation of embedding a signature watermark into a media stream according to a related technology;
FIG. 6 is a diagram of an application scenario according to an embodiment of this application;
FIG. 7A and FIG. 7B are diagrams of a channel key agreement process according to an embodiment of this application;
FIG. 8A and FIG. 8B are diagrams of another channel key agreement process according to an embodiment of this application;
FIG. 9 is a schematic flowchart of a media data transmission method according to an embodiment of this application;
FIG. 10 is a diagram of a signature authentication process according to an embodiment of this application;
FIG. 11 is a diagram of a structure of a media data transmission apparatus according to an embodiment of this application;
FIG. 12 is a diagram of a structure of another media data transmission apparatus according to an embodiment of this application; and
FIG. 13 is a diagram of a hardware structure of a communication device according to an embodiment of this application.

### DESCRIPTION OF EMBODIMENTS

To make the objectives, technical solutions, and advantages of this application clearer, the following further describes the implementations of this application in detail with reference to the accompanying drawings.

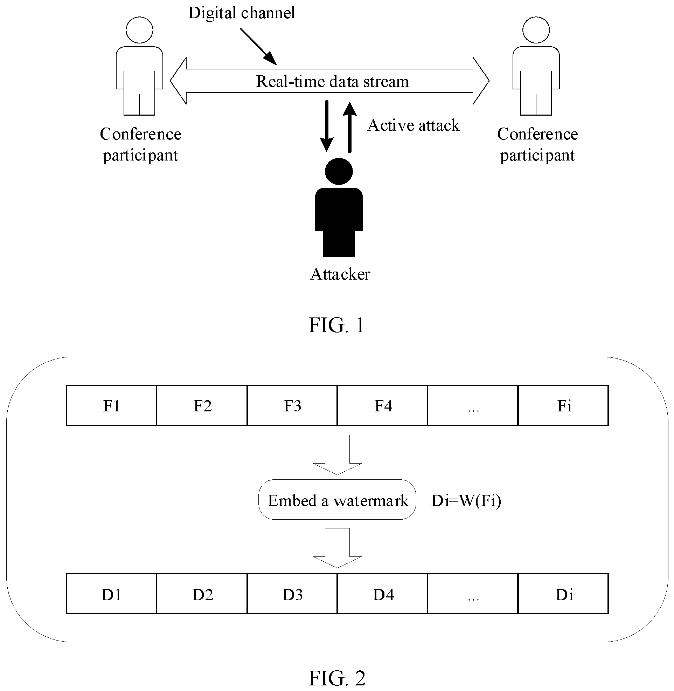

Man-in-the-middle attacks are a common type of active attack in data transmission. Attackers can carry out attacks such as reading, tampering with, inserting, deleting, and rearranging transmitted data. For example, FIG. 1 is a diagram of a man-in-the-middle attack according to an embodiment of this application. As shown in FIG. 1, an attacker may launch an active attack against a real-time data stream exchanged between different terminal users through a digital channel.

Therefore, protecting exchanged data from man-in-the-middle attacks using data protection technologies is essential to communication security. Currently, common data protection technologies include a digital watermarking technology, a data fingerprinting technology and a digital signature technology.

The digital watermarking technology is a technology of embedding specific information such as copyright information or user information of a provider into digital media, to protect copyright of the digital media, prove authenticity and reliability of a product, trace piracy, or provide additional information of the product. Digital watermarks may be embedded into various digital media, for example, images, audios, videos, and texts. Watermark information embedded into a carrier file does not affect observability and integrity of an original file. The digital watermarks may be classified into a visible watermark and an invisible watermark based on visibility of the digital watermarks. The visible watermark is visible information directly embedded into digital media, for example, texts or images. The visible watermark can be used to identify an owner or copyright information of the digital media. The invisible watermark is invisible information embedded into digital media, for example, digital code or noise. The invisible watermark can be used to verify integrity and authenticity of the digital media and trace a source of the digital media. The digital watermarking technology is widely used in fields such as copyright protection, anti-counterfeiting, digital forensics, and information hiding. The digital watermarking technology has become one of important means of digital media security protection.

The digital fingerprint technology is a technology used to identify digital content, similar to a concept of human fingerprints. Digital fingerprints may be used to compute and analyze digital content to generate a unique identifier (equivalent to providing an identity for the digital content), for identifying and verifying authenticity and integrity of the digital content. The digital fingerprint technology is widely used in fields such as copyright protection, content identification, and network security. An implementation of the digital fingerprint technology includes hash algorithm, feature extraction and comparison, and the like.

The digital signature technology is a technology used to verify authenticity and integrity of data. Digital signatures are classified into an asymmetric signature and a symmetric signature. In an asymmetric signature scheme, a sender signs a message with a private key held by the sender. Upon receiving data from the sender and the sender's signature value for the data, a receiver verifies the signature value based on the public key held by the sender. In a symmetric signature scheme, the sender signs a message with a symmetric key. Upon receiving data from the sender and the sender's signature value for the data, the receiver verifies the signature value based on the symmetric key. If verification of the signature value succeeds, it indicates that the data is not tampered with. If verification of the signature value fails, it indicates that the data is tampered with. Signature verification can be used to verify integrity (not tampered with) and authenticity (not false data or forged data) of data. The digital signature technology can be used to protect various electronic documents and data such as digital media data, electronic contracts, and emails.

In a related technology, a digital watermark is embedded into media data, to implement identification and tracing of the media data. The media data includes but is not limited to audio data, video data, file data, and other digital streaming media data, for example, a remote shared desktop, a remote shared document, and a remote shared application. The audio data is used as an example. Watermark information may be embedded into the audio data in real time by using an audio watermark technology. This process may occur in any transmission process. The audio watermark technology is a digital copyright protection technology. It protects copyright of audio content by embedding specific information into audio signals. The information may be in a form of digital code, a digital signature, a digital watermark, or the like. The information is embedded into different parameters such as a time domain, a frequency domain, a phase, and an amplitude of the audio signal, to ensure that quality and audibility of the audio signal are not affected.

The audio data is classified into file information and real-time information. Regardless of the file information or the real-time information, an internal structure of the audio data is a frame-based structure. The entire audio data is segmented into several audio data frames Fi. The audio data frame is a smallest unit of an audio segment, and sending and encoding/decoding are performed based on a data length of the audio data frame. Therefore, in a current audio watermark embedding solution, the watermark information may be embedded between frequency signal components of each audio data frame by using a watermark embedding algorithm W(Fi) in a frequency masking manner in a unit of an audio data frame, to obtain an audio data frame Di including the watermark information. i is an integer greater than 1. For example, FIG. 2 is a diagram of frame-based audio watermark embedding according to a related technology. To eliminate interference and meet needs of a real-time transmission scenario, a location of an audio watermark segment in an audio data frame needs to be determined by using a synchronization frame, so that the audio watermark segment can be accurately restored at an extraction end. In addition, due to the covert communication feature of watermark information, the watermark information may be used as an out-of-band communication channel for carrying authentication information. Unlike conventional cryptographic authentication measures, data transmission in real-time communication is more covert and is harder to detect and crack.

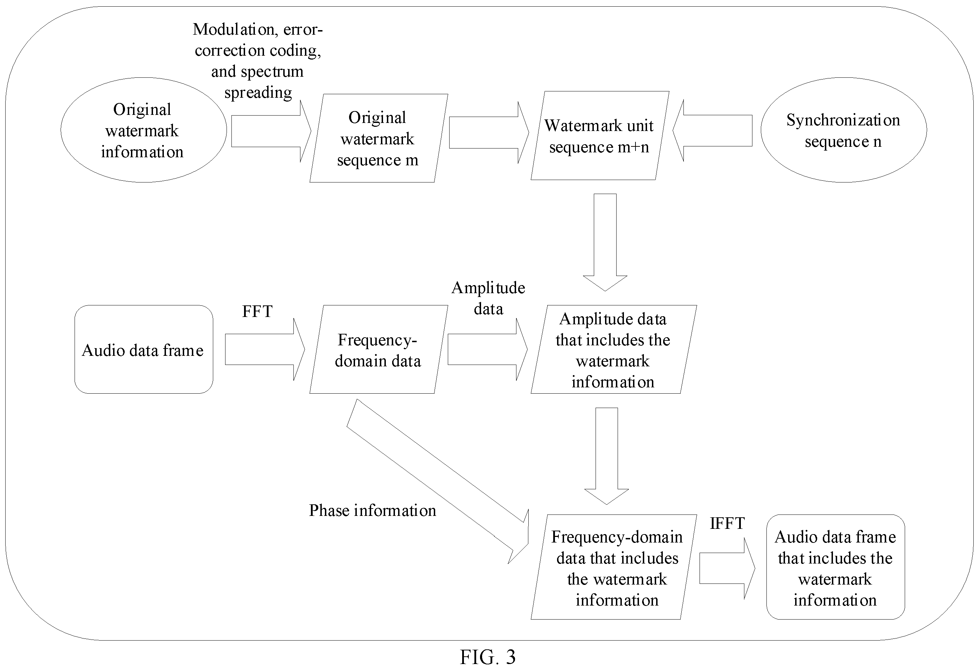

For example, FIG. 3 is a diagram of an implementation of an audio watermarking algorithm according to a related technology. As shown in FIG. 3, an implementation process of embedding watermark information into an audio data frame includes the following step A1 to step A5.

In step A1, original watermark information undergoes modulation, error-correction coding, and spectrum spreading to generate an original watermark sequence m, where m={m(i); i=0, ..., L-1; m(i)∈{0,1}}. Here, L represents a length of the original watermark sequence, typically measured in bits.

In step A2, a synchronization sequence n is added to the original watermark sequence m to obtain a watermark unit sequence m+n, where n={n(i); i=0, ..., L-1; n(i)∈{0,1}}.

In step A3, fast Fourier transform (fast Fourier transform, FFT) is performed on a raw audio data frame based on a data length of an audio data frame, to convert the raw audio data frame into frequency-domain data.

In step A4, amplitude data in a fixed frequency-domain information segment of the frequency-domain data is dynamically modified, where an amplitude reduction operation is performed on amplitude data corresponding to 0 in the watermark unit sequence, and an amplitude increase operation is performed on amplitude data with 1 in the watermark unit sequence, to complete watermark embedding and obtain amplitude data including watermark information.

In step A5, inverse fast Fourier transform (inverse fast Fourier transform, IFFT) is performed on the frequency-domain data that includes the watermark information, to restore the data to the audio data frame that includes the watermark information.

At this point, embedding of the audio watermark into the audio data is completed. Each audio segment is coupled with the watermark information, and with the dissemination of the audio, it is widely used in scenarios such as source tracing and copyright declaration.

However, limited by low security of a digital watermark algorithm itself, anyone who illegally obtains the digital watermark algorithm can easily forge watermark information. In addition, due to decoupling of the watermark information from media data content, as well as the fact that the watermark information is not securely bound to authentication, an attacker can easily remove or tamper with the original watermark information after intercepting the media data content embedded with the watermark information. Therefore, it is difficult to verify authenticity and integrity of the media data content based on the watermark information, and problems such as forgery, repudiation, and framingmay occur.

Regarding the problem of decoupling the watermark information from the media data content, digital fingerprints can be embedded into the media data as the watermark information. This approach is effective because the digital fingerprints can provide an identity for data. An audio fingerprint technology is used as an example. An implementation of the audio fingerprint technology usually includes two phases: feature extraction and fingerprint matching. In the feature extraction phase, an audio signal is converted into a group of digital features that can reflect information such as a time domain, a frequency domain, a phase, and an amplitude of the audio signal. In the fingerprint matching phase, the digital feature obtained through conversion is compared with a fingerprint in a database, to determine an identity of the audio signal.

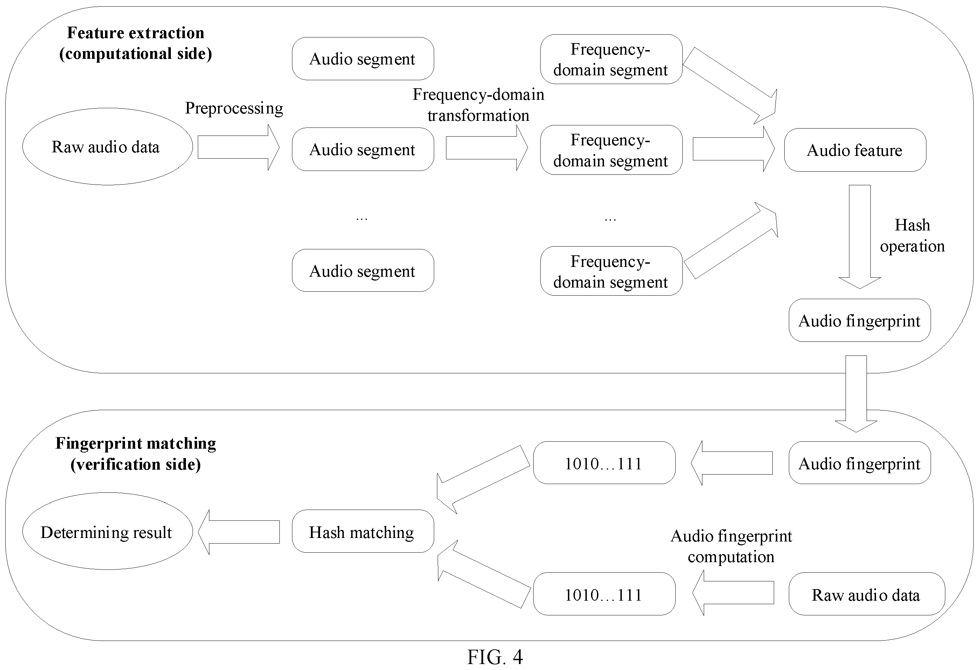

For example, FIG. 4 is a diagram of an implementation of an audio fingerprint algorithm according to a related technology. As shown in FIG. 4, a process of computing and verifying an audio fingerprint includes the following step B1 to step B5. Step B1 to step B4 are a process of computing the audio fingerprint (corresponding to the foregoing feature extraction phase), and step B5 is a process of verifying the audio fingerprint (corresponding to the foregoing fingerprint matching phase).

In step B1, raw audio data is preprocessed to obtain a plurality of audio segments.

The pre-processing process usually includes adding a Hamming window and frame segmentation.

In step B2, frequency-domain transformation is performed on the plurality of audio segments by using an FFT function, to obtain a plurality of frequency-domain segments.

In step B3, features of the plurality of frequency-domain segments are extracted through singular value decomposition (singular value decomposition, SVD), feature matrix selection, and the like, to obtain an overall audio feature.

In step B4, a hash operation is performed on the audio feature to obtain a hash feature value, and the hash feature value is used as an audio fingerprint.

In step B5, after obtaining the raw audio data and the audio fingerprint, an extraction end computes an audio fingerprint of the obtained raw audio data, and uses a matching function to compute a bit error ratio (bit error ratio, BER) (that is, hash matching) between the obtained audio fingerprint and the audio fingerprint obtained through computation, to determine whether the two are from a same data source.

It can be learned from the foregoing implementation procedure of the audio fingerprint algorithm that a plurality of steps such as spectrum analysis, feature extraction, and a hash operation needs to be performed on an audio signal to obtain the audio fingerprint through computation, which includes a large computational load. Consequently, computing the audio fingerprint is typically time-consuming. Although the audio fingerprint provides identity information for audio data, and using the audio fingerprint as a watermark can resolve an existing problem of decoupling watermark information from data content, for an audio stream that needs to be transmitted in real time, time consumed for computing the audio fingerprint cannot satisfy the requirement of embedding, into a current audio data frame in real time, an audio fingerprint of the audio data frame and using the audio fingerprint as watermark information for transmission. In addition, after the audio fingerprint is embedded into the current audio data frame as the watermark information, data content of the current audio data frame is changed, and in turn, a computation result of the audio fingerprint of the current audio data frame is affected. Therefore, embedding the audio fingerprint into the current audio data frame is prone to an error in the fingerprint matching phase.

To resolve the problem of watermark information not being securely bound to authentication, the related technology proposes to embed digital signatures as watermark information into media data. However, because a watermark embedding algorithm is time-consuming, and a signature algorithm is also time-consuming, especially an asymmetric signature algorithm, which takes longer than a symmetric signature algorithm under the premise of equal security, when both the watermark embedding algorithm and the signature algorithm exist, a combination of time consumption of the watermark embedding algorithm and the signature algorithm makes it difficult to ensure real-time transmission of media streams. Limited by lowdelay performance of real-time communication, the current solution can only apply signatures to some data frames (for example, key frames), to minimize an impact of a delay caused by watermark embedding and signature on real-time transmission of the media streams.

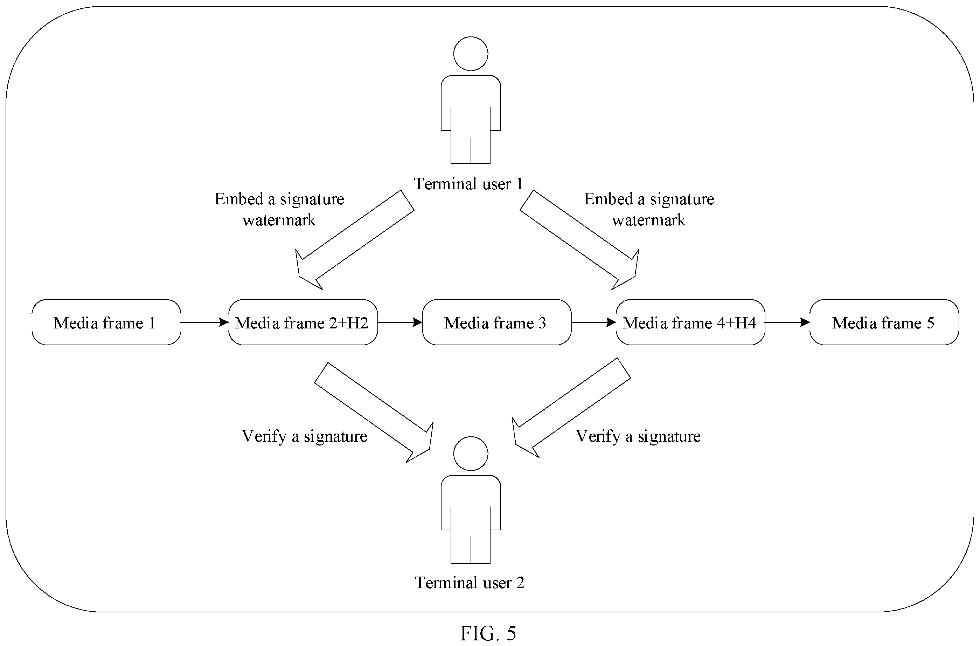

For example, FIG. 5 is a diagram of an implementation of embedding a signature watermark into a media stream according to a related technology. As shown in FIG. 5, in a process of transmitting a media stream to a terminal user 2 in real time, a terminal user 1 prevents a thirdparty unauthorized user from modifying data content through signature authentication. Specifically, a signature value is generated by using a signature algorithm (symmetric signature or asymmetric signature), and then the generated signature value is added to a real-time media stream in a form of a watermark. For example, the media stream transmitted by the terminal user 1 to the terminal user 2 in real time includes a media frame 1, a media frame 2, a media frame 3, a media frame 4, and a media frame 5 sequentially, where the media frame 2 and the media frame 4 are key frames. The terminal user 1 embeds a signature watermark H2 for the media frame 2 into the media frame 2, and embeds a signature watermark H4 for the media frame 4 into the media frame 4. In this way, after receiving the media stream from the terminal user 1, the terminal user 2 may verify the signature carried in the media frame, to verify authenticity and integrity of the media stream. Embedding a signature watermark into a media frame refers to embedding a signature into the media frame by using a digital watermark algorithm.

However, disadvantages of embedding the signature watermark into the media frame are also apparent. To be specific, only a key frame can be checked, but correctness of all media frames cannot be ensured. Excessive key frames affect real-time transmission of the media stream. For example, for an audio stream, excessive key frames are prone to audio-video desynchronization or audio stuttering. However, too few key frames result in low verification reliability of the media stream.

In view of defects in a related technology, this application provides a technical solution. The technical solution combines a digital watermarking technology, a digital fingerprint technology, and a digital signature technology. A communication party serving as a transmit end signs fingerprint information of previously sent media data, includes a signature value in a digital watermark, and embeds the digital watermark into subsequently sent media data. A communication party serving as a receive end may verify, based on the fingerprint information of the previously received media data, the signature value in the subsequently received media data, to determine integrity and authenticity of the previously transmitted media data, thereby implementing end-to-end authentication. By embedding the digital watermark associated with the previously transmitted media data into the subsequently transmitted media data, this resolves the problems in the related technology where time consumed for computing an audio fingerprint affects real-time transmission of the media data, and embedding the audio fingerprint into current media data changes data content, leading to an error in a fingerprint matching phase, and also resolves the problem in the related technology where time consumed for signature affects real-time transmission of the media data.

The technical solution provided in this application is specifically as follows: A first communication party obtains first fingerprint information of first media data. The first communication party generates a first digital watermark based on the first fingerprint information, where the first digital watermark includes a first signature value obtained by the first communication party by signing a first authentication message with a target key, and the first authentication message includes the first fingerprint information. The first communication party sends the first media data and second media data to a second communication party, where the first digital watermark is embedded into the second media data, and the second media data is sent after the first media data. Correspondingly, after receiving the first media data and the second media data that are sequentially sent by the first communication party, the second communication party may determine authenticity of the first media data by verifying the first signature value in the first digital watermark embedded into the second media data. The signature value in the digital watermark is obtained by computing the authentication message including the fingerprint information of the media data by the transmit end with the target key, where the fingerprint information can provide an identity credential for the media data, so that the generated digital watermark can be coupled with the media data to prevent malicious forgery; and the signature value can be used to determine authenticity of the media data and implement end-to-end authentication on the first media data. Attackers typically find it difficult to steal both the target key for generating the digital watermark and an algorithm for generating the digital watermark. Consequently, it is challenging for the attackers to forge the digital watermark to carry out undetected attacks. Therefore, the solution proposed in this application can allow the media data to be securely transmitted between the two communicating parties. In addition, in this application, the digital watermark generated based on the previously transmitted media data is embedded into the subsequently transmitted media data. In a real-time communication scenario, time consumed by the transmit end to compute the fingerprint, perform signing, and embed the digital watermark into the media data during generation of the digital watermark does not affect the previously transmitted media data, so that smoothness and real-time performance of media data transmission can be achieved. In addition, because the digital watermark is embedded into the subsequently transmitted media data, the embedded digital watermark does not affect fingerprint computation of the previously transmitted media data, thereby resolving a problem of irreversible rewriting of the current media data caused by embedding the digital watermark into the current media data.

The following describes the technical solution of this application in detail from a plurality of perspectives such as an application scenario, a method procedure, a software apparatus, a hardware apparatus, and a system.

The following describes an example of an application scenario of embodiments of this application.

Embodiments of this application may be applied to various communication scenarios for transmitting media data, for example, point-to-point communication and group communication. The point-to-point communication refers to instant communication between two communication parties, for example, a voice communication service or a video communication service in an instant messaging application. The group communication refers to instant communication between two or more communication parties. Two common scenarios of group communication are a non-real-time asynchronous interaction scenario and a real-time synchronous interaction scenario. The nonreal-time asynchronous interaction scenario is mainly multi-party information interaction, for example, a group message communication service in an instant messaging application. The real-time synchronous interaction scenario is mainly multi-party real-time audio and video conferences such as a temporary small group conference and a scheduled large-scale organizational conference.

Optionally, the media data includes but is not limited to audio data, video data, file data, and other digital streaming media data, for example, a remote shared desktop, a remote shared document, and a remote shared application.

In a group communication scenario, to ensure security of messages exchanged between a plurality of communication parties, encrypting communication data is a common processing method currently. For example, all communication nodes in a group use an agreed key to encrypt a sent message or decrypt a received message, to implement encrypted communication. Usually, a key used to encrypt a communication message in a group may be referred to as a shared key. A plurality of communication nodes in the group may be classified into a management node and a member node based on roles. The management node is responsible for generating the shared key and delivering the shared key to all member nodes. To ensure secure delivery of the shared key, the management node may negotiate a channel key with each member node, encrypt the shared key with the channel key obtained through negotiation, and then send the encrypted shared key to a corresponding member node. After receiving the encrypted shared key, the member node performs decryption by using the channel key obtained through negotiation with the management node, to obtain the shared key, to securely distribute the shared key in the group. Then, a plurality of communication nodes in the group encrypt the communication message with the shared key, to implement E2EE secure communication.

A video conference scenario is used as an example. Generally, a video conference may include a plurality of conference participants, with each conference participant joining the video conference through a conference terminal. A form of the conference terminal may be a dedicated physical device, or may be a software program having a conference function. The software program may be run on various compute devices, for example, various user terminals such as a mobile phone, a tablet computer, and a computer. In this case, a compute device that runs the software program may also be considered as a conference terminal. The conference terminal joins the video conference through a conference service platform. Specifically, the conference terminal may obtain media data of the video conference from the conference service platform, and send locally collected media data to the conference service platform, so that the conference service platform forwards the media data to another conference terminal participating in the conference. Conference terminals can be connected through a wireless network, allowing conference participants to join the video conference seamlessly, regardless of their locations. In some cases, one conference participant may include only one conference-participating user. For example, the conference-participating user joins a video conference through a conference software program running on a personal mobile phone. In some cases, one conference participant may alternatively include a plurality of conference-participating users. For example, in a conference room scenario, a plurality of conference-participating users in a conference room join a video conference through one conference terminal in the conference room.

In the video conference scenario, when the plurality of conference participants join the conference, digital channels are separately established between conference terminals and the conference service platform for communication, where the digital channels include a signaling channel and a media channel. The signaling channel is usually used to carry call signaling and conference control signaling. The media channel is usually used to carry a real-time audio and video encoding stream, and the media channel is also generally referred to as an in-band communication channel of a video conference. Correspondingly, a digital watermark may be used as a logic out-of-band communication channel for carrying media authentication information. In the video conference scenario, key bundles required for E2EE generally include public keys of all conference participants, and these public keys may be transmitted through a digital channel established with the conference service platform.

A public key (public key) and a private key (private key) are a key pair (public-private key pair) obtained by using an algorithm. A segment of data encrypted with one key in a key pair can only be decrypted with its counterpart. For example, data encrypted with a public key requires the corresponding private key for decryption, and vice versa. Any attempt to decrypt with the same key used for encryption does not succeed. The public key is a part, of the key pair, that is open to a communication peer, and the private key is a non-public part of the key pair. In normal cases, a private key held by a conference participant cannot be obtained by any third party, including other conference participants and the conference service platform.

In embodiments of this application, a public key and a private key that are held by a conference participant (communication party) may be a device public key and a device private key that are owned by the conference terminal (for example, when a dedicated conference terminal provided in a conference room may be used by one or more users, the public key and the private key are a device public key and a device private key that are owned by the dedicated conference terminal), or may be a user public key and a user private key of a conference-participating user who logs in to the conference terminal (for example, when the conference terminal is a computer device running a conference application, a user public key and a user private key of a user who currently logs in to the conference application are the public key and the private key held by the conference participant; and if the logged-in user is changed, the public key and the private key held by the conference participant change accordingly).

If the public key and the private key that are held by the conference participant are the device public key and the device private key that are held by the conference terminal, when the conference terminal needs to use the public key and the private key that are held by the conference participant, the conference terminal directly reads the device public key and the device private key from a local memory. If the public key and the private key that are held by the conference participant are the user public key and the user private key of the conference-participating user who logs in to the conference terminal, when the user logs in, the conference terminal may obtain and store, based on information about the logged-in user, the user public key and a signature of the user public key by using the user private key, and the signature is used to prove that the logged-in user holds the private key corresponding to the user public key. In some cases, there may be no logged-in user on the conference terminal (for example, a conference terminal in a conference room is public and does not require user log-in), but may be bound to a specific conference-participating user or user terminal while a conference is being held (being temporarily bound). In this case, a user public key and a user private key of the conference-participating user bound to the conference terminal or a device public key and a device private key of the user terminal may alternatively be used as a public key and a private key that are held by the conference participant. If the public key and the private key that are held by the conference participant are the user public key and the user private key of the user, or the device public key and the device private key of the user terminal (for example, a mobile phone or a tablet computer of the user), and the conference terminal and the user terminal are two different physical devices, the conference terminal may obtain the user public key or the device public key of the user terminal through Bluetooth, near field communication (near field communication, NFC), a user input, or the like.

Optionally, a public-private key pair held by the conference participant may include a long-term public-private key pair and/or an ephemeral public-private key pair. The long-term public-private key pair may be an immutable public key generated when a logged-in user registers on the conference terminal, or a public key generated when the conference terminal registers in a conference system. The ephemeral public-private key pair is a public-private key pair that is valid in a period of time and that is updated periodically, for example, the ephemeral public-private key pair is updated at regular intervals or the ephemeral public-private key pair is generated each time the conference terminal joins a conference. A plurality of conference participants may send, in advance, public keys held by the plurality of conference participants to the conference service platform for storage.

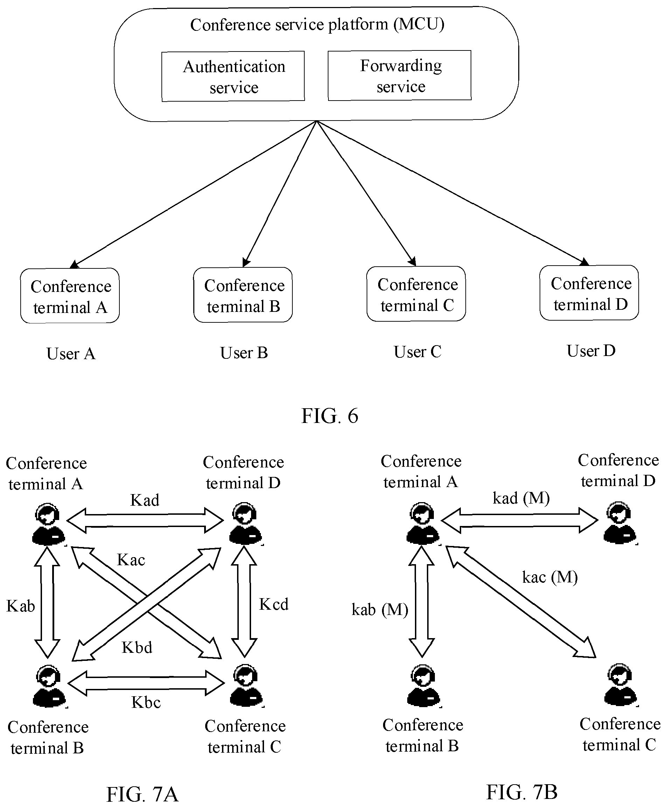

For example, FIG. 6 is a diagram of an application scenario according to an embodiment of this application. The application scenario is a video conference scenario, for example, may be a video conference system. As shown in FIG. 6, the application scenario includes a conference service platform and four conference terminals (a conference terminal A, a conference terminal B, a conference terminal C, and a conference terminal D). Four conference-participating users (a user A, a user B, a user C, and a user D) access the conference by using the conference terminal A, the conference terminal B, the conference terminal C, and the conference terminal D respectively. The user A and the conference terminal A are collectively referred to as a conference participant A, the user B and the conference terminal B are collectively referred to as a conference participant B, the user C and the conference terminal C are collectively referred to as a conference participant C, and the user D and the conference terminal D are collectively referred to as a conference participant D.

Optionally, the conference service platform is a multipoint control unit (multipoint control unit, MCU). The MCU can provide authentication services for conference participants (through conference terminals used by conference-participating users) and forward conference data. For example, the conference terminal A sends video data of the user A side to the MCU, and the MCU forwards the video data to the conference terminal B, the conference terminal C, and the conference terminal D, so that the user B, the user C, and the user D can view a video image of the user A through the conference terminal B, the conference terminal C, and the conference terminal D respectively.

In the video conference scenario, a plurality of conference participants in the conference may negotiate a master key as a shared key in the conference. The master key is typically used to encrypt and decrypt media data and control signaling transmitted in the conference to implement end-to-end encryption.

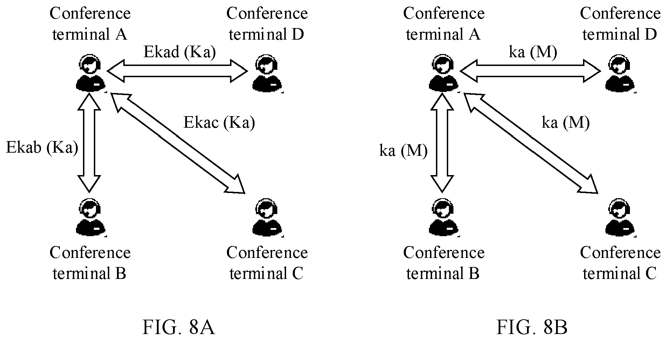

The master key of the conference may be obtained through negotiation among a plurality of conference participants (typically all conference participants), and a negotiation process may be performed based on an E2EE key agreement protocol or a group key agreement protocol. Two common key agreement processes based on the E2EE key agreement protocol may be shown in FIG. 7A and FIG. 7B, and FIG. 8A and FIG. 8B respectively.

In a channel key agreement protocol negotiation process shown in FIG. 7A and FIG. 7B, every two conference terminals form a communication pair. When a conference includes 4 conference terminals, there are 6 communication pairs in total, and each communication pair has a communication key. As shown in FIG. 7A, a communication key between a conference terminal A and a conference terminal B is Kab, a communication key between the conference terminal A and a conference terminal C is Kac, a communication key between the conference terminal A and a conference terminal D is Kad, a communication key between the conference terminal B and the conference terminal C is Kbc, a communication key between the conference terminal B and the conference terminal D is Kbd, and a communication key between the conference terminal C and the conference terminal D is Kcd. After the conference terminal A serving as a conference manager generates a master key M, as shown in FIG. 7B, the conference terminal A encrypts the master key M by using Kab, and sends an encrypted master key to the user B; encrypts the master key M by using Kac, and sends an encrypted master key to the conference terminal C; and encrypts the master key M by using Kad, and sends an encrypted master key to the conference terminal D.

FIG. 8A and FIG. 8B show a key agreement process based on a signal (Signal) protocol in an E2EE key agreement protocol. In an example of channel key agreement shown in FIG. 8A, each conference terminal has a sender key different from that of another conference terminal. When sending a message, the conference terminal uses the sender key of the conference terminal to encrypt the message to be sent, and sends the encrypted message to another user. The conference terminal A is used as an example. The conference terminal A may randomly generate a sender key Ka of the conference terminal A, then encrypt the sender key Ka by using a pairwise key EKab with the conference terminal B, and send an encrypted sender key EKab (Ka) to the conference terminal B; encrypt the sender key Ka by using a pairwise key EKac with the conference terminal C, and send an encrypted sender key EKac (Ka) to the conference terminal C; and encrypt the sender key Ka by using a pairwise key with the conference terminal D, and send an encrypted sender key EKad (Ka) to the conference terminal D. After the conference terminal A serving as the conference manager generates the master key M, as shown in FIG. 8B, the conference terminal A encrypts the master key M by using Ka, and sends an encrypted master key to the conference terminal B, the conference terminal C, and the conference terminal D.

FIG. 7A to FIG. 8B are merely examples of channel key agreement. A process of agreeing on the master key is not limited in embodiments of this application. The master key may be agreed on in another manner. For example, the master key is agreed on based on a message layer security (Message Layer Security, MLS) protocol defined in a Request for Comments (request for comments, RFC) file numbered 9420 (IETF RFC 9420) formulated by the Internet Engineering Task Force (Internet Engineering Task Force, IETF).

The following describes an example of a method procedure in embodiments of this application.

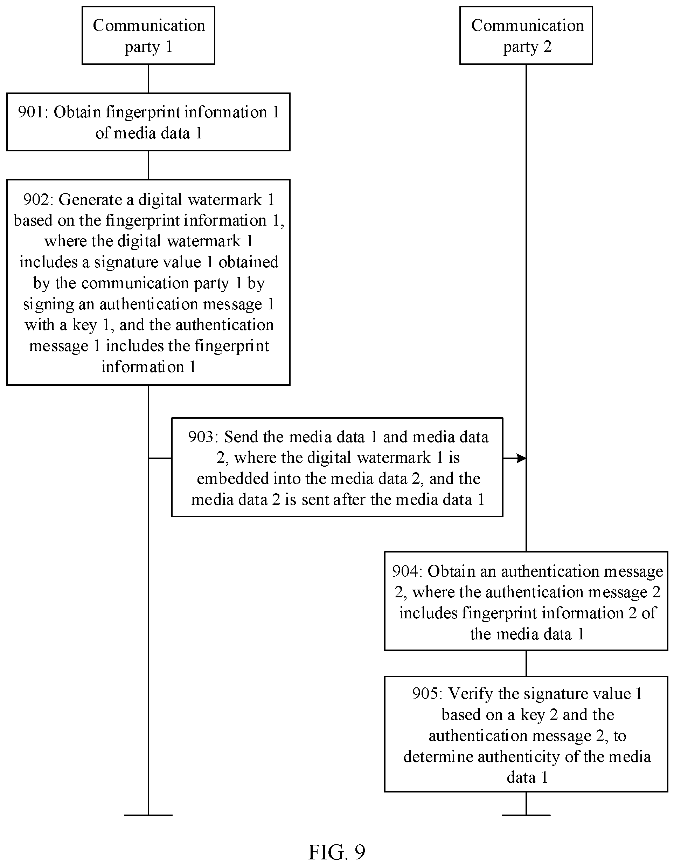

For example, FIG. 9 is a schematic flowchart of a media data transmission method according to an embodiment of this application. As shown in FIG. 9, the method 900 includes but is not limited to the following step 901 to step 905. The method 900 may be applied to group communication, for example, may be applied to the video conference scenario shown in FIG. 6. In this case, a communication party 1 (transmit end) and a communication party 2 (receive end) in the method 900 may be any two conference participants in FIG. 6.

Step 901: The communication party 1 obtains fingerprint information 1 of media data 1.

Optionally, the communication party 1 generates a unique hash value as the fingerprint information 1 by applying a hash algorithm to the media data 1. A media stream between the two communication parties is usually transmitted in a form of a media frame, and the media frame may be, for example, an audio frame or a video frame. The media data 1 may include data content of one media frame, or the media data 1 may include data content of a plurality of adjacent media frames.

Step 902: The communication party 1 generates a digital watermark 1 based on the fingerprint information 1, where the digital watermark 1 includes a signature value 1 obtained by the communication party 1 by signing an authentication message 1 with a key 1, and the authentication message 1 includes the fingerprint information 1.

Optionally, the authentication message 1 further includes authentication attribute information, and correspondingly the digital watermark 1 includes the authentication attribute information and the signature value 1. The media data 1 is denoted as D1, the fingerprint information 1 of the media data 1 is denoted as f(D1), the key 1 is denoted as k1, and the authentication attribute information is denoted as m. In this case, the authentication message 1 may be represented as f(D1) || m, the signature value 1 may be represented as H(k1, f(D1) || m), and the digital watermark 1 may be represented as W1: m || H(k1, f(D1) || m). The symbol || represents string concatenation.

The authentication attribute information may be any information used in generating the digital watermark. For example, the authentication attribute information may be associated with identities of the two communication parties, so that different communication parties use different authentication attribute information, to ensure uniqueness of the authentication attribute information and facilitate subsequent source tracing and forensics. For another example, in a video conference scenario, the authentication attribute information may include conference information, for example, a conference identifier or conference timestamp information. Optionally, the communication party 1 and the communication party 2 are any two communication parties in a group. An implementation for the communication party 1 to obtain the authentication attribute information is as follows: The communication party 1 generates a derived key by using a key derivation function (key derivation function, KDF) and based on a shared key of the group to which the communication party 1 and the communication party 2 belong, an identity of the communication party 1, and an identity of the communication party 2, where the shared key is obtained through negotiation among a plurality of communication parties in the group. The communicating party 1 uses, as the authentication attribute information, a hash value obtained by computing a plurality of identity public keys using the derived key. The plurality of identity public keys include an identity public key of the communication party 1 and an identity public key of the communication party 2. The plurality of identity public keys may further include an identity public key of another communication party in the group.

For example, with reference to the application scenario shown in FIG. 6, the communication party 1 is the conference participant A, and the communication party 2 is the conference participant B. The conference participant A may set a derived key to OTP_OOB=KDF(mk, IDA || IDB || "OOB"), where mk represents a master key, IDA represents an identifier of the conference participant A (an identifier of the user A or an identifier of the conference terminal A), IDB represents an identifier of the conference participant B (an identifier of the user B or an identifier of the conference terminal B), and OOB represents an out-of-band parameter. The out-of-band parameter may be pre-generated by a conference service platform (for example, an MCU), and out-of-band parameters of different conferences may be the same or different. Further, the derived key may alternatively be generated based on an identifier of another conference participant in a conference, or may alternatively be generated based on identifiers of all conference participants in the conference. In addition, the conference participant A may generate a public key string based on a public key of the conference participant A and a public key of the conference participant B. For example, the public key string may be set to allGroupPK=pkA || pkB, where pkA represents the public key of the conference participant A, and pkB represents the public key of the conference participant B. For another example, when public key information includes a long-term public key and an ephemeral public key, the public key string may be set to allGroupPK=epkA || epkB || LongPKA || LongPKB, where epkA represents an ephemeral public key of the conference participant A, epkB represents an ephemeral public key of the conference participant B, LongPKA represents a long-term public key of the conference participant A, and LongPKB represents a long-term public key of the conference participant B. Further, the public key string may alternatively be generated based on a public key of another conference participant in a conference, or may alternatively be generated based on public keys of all conference participants in the conference. Then, the conference participant performs a hash operation on the public key string allGroupPK by using the derived key OTP_OOB, to obtain the authentication attribute information m: Hash(OTP_OOB, allGroupPK). The hash operation herein can use a keyed hash function (keyed hash function). The keyed hash function is a hash function that uses a key as an additional input, and can receive inputs of a message and a key and output a hash value of a fixed length.

Optionally, the signature value 1 may be an asymmetric signature value obtained through calculation by the communication party 1 using an asymmetric signature algorithm. The asymmetric signature algorithm may be, for example, an elliptic curve digital signature algorithm (elliptic curve digital signature algorithm, ECDSA). Alternatively, the signature value 1 may be a symmetric signature value obtained through calculation by the communication party 1 using a symmetric signature algorithm. The symmetric signature algorithm may be, for example, an advanced encryption standard (advanced encryption standard, AES)-cypher-based message authentication code (cypher-based message authentication code, CMAC) (AES-CMAC for short) algorithm.

Optionally, the communication party 1 may sign the authentication message 1 with a private key held by the communication party 1, or a session key obtained through negotiation between the communication party 1 and the communication party 2, or the shared key of the group to which the communication party 1 and the communication party 2 belong. Signing the authentication message 1 with the private key by the communication party 1 is an asymmetric signature, and signing the authentication message 1 with the session key or the shared key of the group is a symmetric signature. The following separately describes three possible implementations of the key 1.

In a first possible implementation, the key 1 is the private key held by the communication party 1. In this case, the communication party 1 signing the authentication message 1 with the key 1 to obtain the signature value 1 may be that the communication party 1 first runs the hash algorithm on the authentication message 1 to obtain a data hash value of a fixed length, and then encrypts the hash value of the fixed length with the private key to obtain the signature value 1, where the signature value 1 is, for example, an ECDSA signature.

In the first possible implementation, the communication party 2 may verify, based on the signature value 1, whether the media data 1 is from the communication party 1 and integrity of the media data 1. Because the private key is usually kept within the device, any third party without the private key cannot forge the signature. When attackers find it difficult to obtain the private key held by the communication party 1, it is challenging to forge the digital watermark 1 generated by the communication party 1 to carry out undetected attacks.

In a second possible implementation, the key 1 is the session key obtained through negotiation between the communication party 1 and the communication party 2. In this case, the signature value 1 obtained by the communication party 1 by signing the authentication message 1 with the key 1 may be message authentication code. For example, the communication party 1 may generate the signature value 1 based on the authentication message 1, the session key, and a hash-based message authentication code (hash-based message authentication code, HMAC) algorithm.

Optionally, an implementation in which the communication party 1 and the communication party 2 negotiate the session key is as follows: One communication party receives a key agreement message sent by the other party, where the key agreement message includes a plurality of public keys for key agreement that are held by the other party and include a long-term identity public key of the other party. The communication party verifies authenticity of the plurality of public keys for key agreement. If the communication party determines that the plurality of public keys for key agreement are all real public keys of the other party, the communication party generates the session key using the plurality of public keys for key agreement and a plurality of private keys for key agreement that are held by the communication party and include a long-term identity private key of the communication party. A key obtained through negotiation based on the long-term identity public key of the other party and the long-term identity private key of the communication party is used in generating the session key. As long as long-term identity private keys of the two communication parties remain uncompromised, an attacker cannot crack the session key generated by the communication party. Therefore, the generated session key is highly secure and confidential.

Optionally, another implementation in which the communication party 1 and the communication party 2 negotiate the session key is as follows: One communication party receives a key agreement message sent by the other party, where the key agreement message includes a plurality of public keys for key agreement that are held by the other party, and authentication sources of the plurality of public keys for key agreement include at least two trusted authorities. The communication party verifies authenticity of the plurality of public keys for key agreement. If the communication party determines that the plurality of public keys are all real public keys for key agreement of the other party, the communication party generates the session key using the plurality of public keys for key agreement and a plurality of private keys for key agreement held by the communication party, where authentication sources of public keys for key agreement corresponding to the plurality of private keys for key agreement include at least two trusted authorities. Because different trusted authorities provide different identity factors for the communication party, the communication party performs multi-factor authentication based on a plurality of identity factors, and the finally generated session key also combines a plurality of identity factors of the two communication parties. Therefore, the generated session key is highly secure and confidential.

In the second possible implementation, the communication party 2 may verify, based on the signature value 1, whether the media data 1 is from the communication party 1 and integrity of the media data 1. Because any third party other than the communication party 1 and the communication party 2 finds it difficult to obtain the session private key through negotiation between the communication party 1 and the communication party 2, it is challenging for attackers to forge the digital watermark 1 generated by the communication party 1 to carry out undetected attacks.

In a third possible implementation, the key 1 is the shared key of the group to which the communication party 1 and the communication party 2 belong, and the shared key is obtained through negotiation among the plurality of communication parties in the group. In this case, the signature value 1 obtained by the communication party 1 by signing the authentication message 1 with the key 1 may be message authentication code. For example, the communication party 1 may generate the signature value 1 based on the authentication message 1, the shared key, and an HMAC algorithm. The shared key is, for example, a master key of the conference.

In the third possible implementation, the communication party 2 may verify, based on the signature value 1, whether the media data 1 is from another communication party in the group and integrity of the media data 1. Because any third party outside the group finds it difficult to obtain the shared key of the group, it is challenging for attackers to forge a digital watermark generated by a communication party in the group to carry out undetected attacks.

Step 903: The communication party 1 sends the media data 1 and media data 2 to the communication party 2, where the digital watermark 1 is embedded into the media data 2, and the media data 2 is sent after the media data 1.

In this embodiment of this application, the digital watermark generated based on the previously transmitted media data is embedded by the transmit end into the subsequently transmitted media data. In a real-time communication scenario, time consumed by the transmit end to compute the fingerprint, perform signing, and embed the digital watermark into the media data during generation of the digital watermark does not affect the previously transmitted media data, so that smoothness and real-time performance of media data transmission can be achieved. In addition, because the digital watermark is embedded into the subsequently transmitted media data, the embedded digital watermark does not affect fingerprint computation of the previously transmitted media data, thereby resolving a problem of irreversible rewriting of the current media data caused by embedding the digital watermark into the current media data.

Optionally, the media data 1 may include data content of one media frame, or the media data 1 may include data content of a plurality of adjacent media frames. Similarly, the media data 2 may include data content of one media frame, or the media data 2 may include data content of a plurality of adjacent media frames. In a possible implementation, the media data 1 is in a media frame 1, the media data 2 is in a media frame 2, and the media frame 2 is a media frame immediately following the media frame 1. In other words, a digital watermark generated based on a preceding frame of media data may be embedded into a subsequent frame of media data. Certainly, this embodiment of this application does not preclude a solution of embedding a digital watermark generated based on a preceding frame into a media frame that is separated by several frames and that is after the preceding frame.

Further, after receiving the media data 1 and the media data 2 that are sent by the communication party 1, the communication party 2 may perform the following step 904 and step 905.

Step 904: The communication party 2 obtains an authentication message 2, where the authentication message 2 includes fingerprint information 2 of the media data 1.

After receiving the media data 1 sent by the communication party 1, the communication party 2 generates the fingerprint information 2 of the media data 1 by applying the same hash algorithm to the media data 1 as applied by the communication party 1 to the media data 1 in step 901. If the media data 1 is not tampered with in a transmission process, the fingerprint information 2 is the same as the fingerprint information 1.

After receiving the media data 2 sent by the communication party 2, the communication party 2 extracts the digital watermark 1 from the media data 2 by using a watermark extraction algorithm. When the digital watermark 1 includes only the signature value 1, the communication party 2 may use the fingerprint information 2 obtained through computation as the authentication message 2. In this case, step 904 may be that the communication party 2 obtains the authentication message 2 based on the media data 1. When the digital watermark 1 includes the authentication attribute information and the signature value 1, the communication party 2 may use, as the authentication message 2, the fingerprint information 2 obtained through computation and the authentication attribute information extracted from the digital watermark 1. In this case, step 904 may be that the communication party 2 obtains the authentication message 2 based on the media data 1 and the media data 2.

Step 905: The communication party 2 verifies the signature value 1 based on a key 2 and the authentication message 2, to determine authenticity of the media data 1.

With reference to the first possible implementation of step 902, if the key 1 is a private key held by the communication party 1, the key 2 is a public key held by the communication party 1. In other words, the key 2 and the key 1 are a public-private key pair held by the communication party 1. The communication party 2 verifying the signature value 1 based on the key 2 and the authentication message 2 may be that the communication party 2 may first run, on the authentication message 2, the same hash algorithm as is run by the communication party 1 on the authentication message 1, to obtain a data hash value 1, and then decrypt the signature value 1 with the key 2 to obtain a data hash value 2. If the data hash value 1 is the same as the data hash value 2, it is determined that the media data 1 is real data. If the data hash value 1 is different from the data hash value 2, it is determined that the media data 1 is not real data.

With reference to the second possible implementation of step 902, if the key 1 is the session key obtained through negotiation between the communication party 1 and the communication party 2, the key 2 and the key 1 are a same key. In this implementation, the signature value 1 may be message authentication code. In this case, the communication party 2 verifying the signature value 1 based on the key 2 and the authentication message 2 may be that the communication party 2 may obtain the message authentication code through computation based on the authentication message 2, the session key, and the HMAC algorithm. If the message authentication code obtained by the communication party 2 through computation is the same as message authentication code (the signature value 1) carried in the digital watermark 1, it is determined that the media data 1 is real data. If the message authentication code obtained by the communication party 2 through computation is not the same as message authentication code (the signature value 1) carried in the digital watermark 1, it is determined that the media data 1 is not real data.

With reference to the third possible implementation of step 902, if the key 1 is the shared key of the group to which the communication party 1 and the communication party 2 belong, the key 2 and the key 1 are a same key. In this implementation, the signature value 1 may be message authentication code. In this case, the communication party 2 verifying the signature value 1 based on the key 2 and the authentication message 2 may be that the communication party 2 may obtain the message authentication code through computation based on the authentication message 2, the shared key, and the HMAC algorithm. If the message authentication code obtained by the communication party 2 through computation is the same as message authentication code (the signature value 1) carried in the digital watermark 1, it is determined that the media data 1 is real data. If the message authentication code obtained by the communication party 2 through computation is not the same as message authentication code (the signature value 1) carried in the digital watermark 1, it is determined that the media data 1 is not real data.

In this embodiment of this application, the signature value in the digital watermark is obtained by computing the authentication message including the fingerprint information of the media data by the transmit end with the key, where the fingerprint information can provide an identity credential for the media data, so that the generated digital watermark can be coupled with the media data to prevent malicious forgery; and the signature value can be used to determine authenticity of the media data and implement end-to-end authentication on the first media data. Attackers typically find it difficult to steal both the target key for generating the digital watermark and an algorithm for generating the digital watermark. Consequently, it is challenging for the attackers to forge the digital watermark to carry out undetected attacks. Therefore, the solution proposed in this embodiment of this application can allow the media data to be securely transmitted between the two communicating parties.

In addition, based on the concept provided in this embodiment of this application that the digital watermark generated based on the previously transmitted media data is embedded into the subsequently transmitted media data, the communication party 1 may further obtain fingerprint information 3 of the media data 2, and generate a digital watermark 2 based on the fingerprint information 3. The digital watermark 2 includes a signature value 2 obtained by the communication party 1 by signing the authentication message 3 with the key 1, and the authentication message 3 includes the fingerprint information 2. After sending the media data 2 to the communication party 2, the communication party 1 sends media data 3 to the communication party 2, where the digital watermark 2 is embedded into the media data 3. Correspondingly, after receiving the media data 3 sent by the communication party 1, the communication party 2 obtains an authentication message 4, where the authentication message 4 includes fingerprint information 4 of the media data 2. The communication party 2 verifies the signature value 2 based on the key 2 and the authentication message 4 to determine authenticity of the media data 2. For an implementation of this process, reference may be made to the foregoing step 901 to step 905, and the process is repeated until the entire media stream transmission ends.

In this application, an implementation procedure of the foregoing method 900 is described by using an example in the following embodiments.

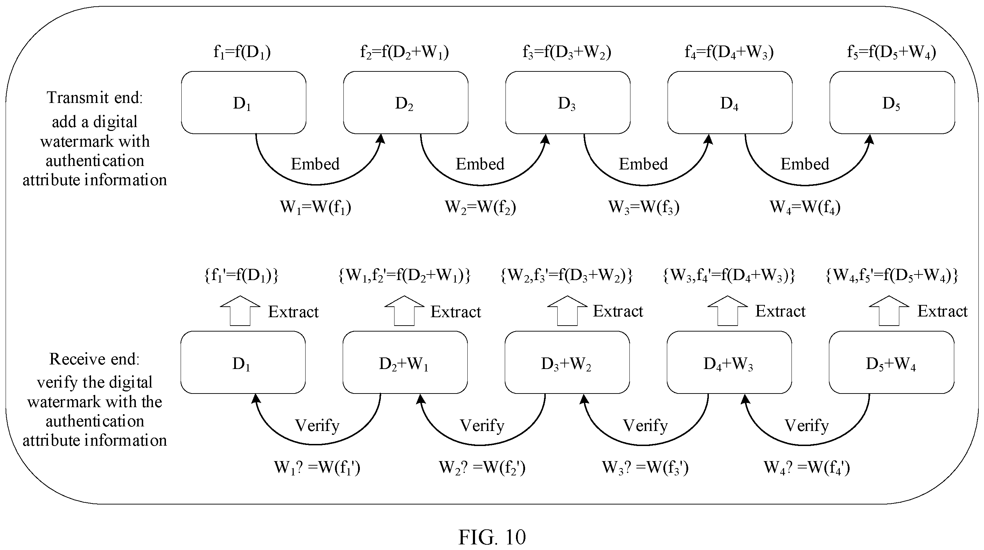

For example, the transmit end embeds a digital watermark generated based on a preceding media frame into a subsequent media frame, and the receive end checks the preceding media frame by using a backward check algorithm and based on information about the subsequent media frame. FIG. 10 is a diagram of a signature authentication process according to an embodiment of this application. First, Dᵢ is defined as an i^{th} media frame obtained by segmenting a media stream, where i is a positive integer. f(Dᵢ) represents a fingerprint algorithm and is used to compute fingerprint information fᵢ of the i^{th} media frame. m represents the authentication attribute information. W(fᵢ) represents a watermark generation algorithm and is used to generate a digital watermark Wᵢ based on the fingerprint information fᵢ of the i^{th} media frame, where Wᵢ=m || H(k, fᵢ || m), H represents a hash function, and k represents a key for hash computation.

Refer to FIG. 10. The transmit end adds a digital watermark with authentication attribute information to a media frame. Specific implementation steps are as follows: (1) computing fingerprint information fᵢ of a media frame Dᵢ transmitted in real time, and then for the fingerprint information fᵢ and the authentication attribute information m, computing signature information Hᵢ=H(k, fᵢ || m) by using a key k; (2) performing character concatenation on the frame signature information Hᵢ and the authentication attribute information m to obtain a digital watermark Wᵢ; and (3) embedding the digital watermark Wᵢ into a subsequent media frame Dᵢ₊₁ by using a watermark algorithm to complete watermark embedding. The foregoing steps 1 to 3 are repeated for the subsequent media frame Dᵢ₊₁ into which the digital watermark Wᵢ is embedded, to complete a cyclic embedding process.

Refer to FIG. 10. The receive end verifies the digital watermark with the authentication attribute information in the media frame. Specific implementation steps are as follows: (1) extracting the digital watermark Wᵢ from the media frame Dᵢ₊₁ by using the watermark extraction algorithm; (2) computing fingerprint information fᵢ' of a preceding frame Dᵢ, and extracting the authentication attribute information m from the digital watermark Wᵢ; (3) for the fingerprint information fᵢ' and the authentication attribute information m, computing W(fᵢ')=m || H(k, fᵢ' || m) by using the key k; and (4) determining whether values of W(fᵢ') and Wᵢ are the same, where if the values are the same, checking succeeds; or if the values are different, checking fails. According to the foregoing steps 1 to 4, a digital watermark Wᵢ₊₁ in the media frame Dᵢ₊₂ continues to be used to check the media frame Dᵢ₊₁ until the check process is completed.

In embodiments of this application, a digital watermarking technology, a digital fingerprint technology, and a digital signature technology are combined. A communication party serving as a transmit end signs fingerprint information of previously sent media data, includes a signature value in a digital watermark, and embeds the digital watermark into subsequently sent media data. A communication party serving as a receive end may verify, based on the fingerprint information of the previously received media data, the signature value in the subsequently received media data, to determine integrity and authenticity of the previously transmitted media data, thereby implementing end-to-end authentication. By embedding the digital watermark associated with the previously transmitted media data into the subsequently transmitted media data, this resolves the problems where fingerprint computation time affects real-time transmission of the media data, and embedding the fingerprint into current media data changes data content, leading to an error in a fingerprint matching phase, resolves the problem where time consumed for signature affects real-time transmission of the media data, and implements continuous and automated out-of-band authentication (out-of-band authentication, OOBA) on the media data.

The following uses the video conference scenario shown in FIG. 6 as an example to describe a specific implementation of this embodiment of this application. It is assumed that the communication party 1 is the conference participant A, and the communication party 2 is the conference participant B.

In step S1, the conference participant A is registered with an MCU of the video conference system, and sends a public key bundle (public key bundle) of the conference participant A to the MCU; the conference participant B is registered with the MCU of the video conference system, and sends a public key bundle of the conference participant B to the MCU; the conference participant C is registered with the MCU of the video conference system, and sends a public key bundle of the conference participant C to the MCU; and the conference participant D is registered with the MCU of the video conference system, and sends a public key bundle of the conference participant D to the MCU.

Optionally, the public key bundle of the conference participant A may include a long-term public key LongPKA and an ephemeral public key epkA. The public key bundle of the conference participant B may include a long-term public key LongPKB and an ephemeral public key epkB. The public key bundle of the conference participant C may include a long-term public key LongPKC and an ephemeral public key epkC. The public key bundle of the conference participant D may include a long-term public key LongPKD and an ephemeral public key epkD.

In step S2, as a conference initiator, the conference participant A obtains the public key bundles of the conference participant B, the conference participant C, and the conference participant D from the MCU; the conference participant B joins the conference and obtains the public key bundles of the conference participant A, the conference participant C, and the conference participant D from the MCU; the conference participant C joins the conference and obtains the public key bundles of the conference participant A, the conference participant B, and the conference participant D from the MCU; and the conference participant D joins the conference and obtains the public key bundles of the conference participant A, the conference participant B, and the conference participant C from the MCU.

In step S3, the conference participant A, the conference participant B, the conference participant C, and the conference participant D negotiate a master key mk.

In step S4, the conference participant A generates authentication attribute information m.

For example, the conference participant A generates a public key string allGroupPK=epkA || epkB || epkC || epkD || LongPKA || LongPKB || LongPKC || LongPKD, and then generates a derived key OTP_OOB=KDF(mk, IDA || IDB || IDC || IDD || "OOB"), where mk represents the master key, IDA represents an identifier of the conference participant A, IDB represents an identifier of the conference participant B, IDC represents an identifier of the conference participant C, IDD represents an identifier of the conference participant D, and OOB represents an out-of-band parameter. Then, the conference participant A performs a hash operation on the public key string allGroupPK based on the derived key OTP_OOB to obtain the authentication attribute information m.

In step S5, the conference participant A generates the digital watermark 1 based on the authentication attribute information m and the fingerprint information of the media data 1, where the digital watermark 1 includes the authentication attribute information m and a signature value obtained by the conference participant A by signing the authentication attribute information m and the fingerprint information of the media data 1 with the master key mk.

In step S6, the conference participant A sends the media data 1 and the media data 2 to the conference participant B, the conference participant C, and the conference participant D sequentially, where the digital watermark 1 is embedded into the media data 2.

In step S7, each of the conference participant B, the conference participant C, and the conference participant D verifies the signature value in the digital watermark 1 based on the master key mk, the authentication attribute information m in the digital watermark 1, and their respective fingerprint information of the media data 1 obtained through computation, to determine whether the media data 1 is real data.

A sequence of steps of the foregoing media data transmission method provided in this embodiment of this application can be properly adjusted, and steps can also be correspondingly added or deleted based on a situation. Any method variation readily figured out by a person skilled in the art within the technical scope disclosed in this application shall fall within the protection scope of this application. For example, authentication attribute information related to personal identities is added to digital watermarks to facilitate source tracing and security forensics of media data. For another example, a communication party may serve as both a transmit end and a receive end of media data, that is, the communication party may have both a capability of performing step 901 to step 903 (steps performed by the transmit end) and a capability of performing step 904 and step 905 (steps performed by the receive end).

An embodiment of this application further provides a media data transmission method. The method may be applied to various application scenarios related to media data transmission, for example, may be applied to the video conference scenario shown in FIG. 6. An implementation procedure of the method includes but is not limited to the following step M1 to step M3.

In step M1, a first communication party obtains first fingerprint information of first media data.

In step M2, the first communication party generates a first digital watermark based on the first fingerprint information, where the first digital watermark includes a first signature value obtained by the first communication party by signing a first authentication message with a target key, and the first authentication message includes the first fingerprint information.

In step M3, the first communication party sends the first media data and second media data to a second communication party, where the first digital watermark is embedded into the second media data, and the second media data is sent after the first media data.

When the method is specifically used to implement the embodiment shown in the method 900, the first communication party may be, for example, a communication party 1, the second communication party may be, for example, a communication party 2, the first media data may be, for example, media data 1, the second media data may be, for example, media data 2, the first fingerprint information may be, for example, fingerprint information 1, the first digital watermark may be, for example, a digital watermark 1, the first authentication message may be, an authentication message 1, and the first signature value may be, for example, a signature value 1.

Optionally, the target key is a private key held by the first communication party; the target key is a session key obtained through negotiation between the first communication party and the second communication party; or the target key is a shared key of a group to which the first communication party and the second communication party belong, where the shared key is obtained through negotiation among a plurality of communication parties in the group.

Optionally, the first media data is in a first media frame, the second media data is in a second media frame, and the second media frame is a media frame immediately following the first media frame.

Optionally, the first authentication message further includes authentication attribute information, and the first digital watermark includes the authentication attribute information and the first signature value.

Optionally, the first communication party generates a derived key by using a key derivation function and based on the shared key of the group to which the first communication party and the second communication party belong, an identity of the first communication party, and an identity of the second communication party, where the shared key is obtained through negotiation among the plurality of communication parties in the group. The first communication party uses, as the authentication attribute information, a hash value obtained by computing a plurality of identity public keys using the derived key, where the plurality of identity public keys include an identity public key of the first communication party and an identity public key of the second communication party.

Optionally, the method further includes: The first communication party obtains second fingerprint information of the second media data. The first communication party generates a second digital watermark based on the second fingerprint information, where the second digital watermark includes a second signature value obtained by the first communication party by signing a second authentication message with the target key, and the second authentication message includes the second fingerprint information. After sending the second media data to the second communication party, the first communication party sends third media data to the second communication party, where the second digital watermark is embedded into the third media data. When the method is specifically used to implement the embodiment shown in the method 900, the second fingerprint information may be, for example, fingerprint information 3, the second digital watermark may be, for example, a digital watermark 2, the second authentication message may be, for example, an authentication message 3, the second signature value may be, for example, a signature value 2, and the third media data may be, for example, media data 3.

Optionally, the first media data and the second media data are audio data, video data, or file data.

An embodiment of this application further provides another media data transmission method. The method may be applied to various application scenarios related to media data transmission, for example, may be applied to the video conference scenario shown in FIG. 6. An implementation procedure of the method includes but is not limited to the following step N1 to step N3.

In step N1, a second communication party receives first media data and second media data that are sent by a first communication party, where the second media data is received after the first media data, a first digital watermark is embedded into the second media data, and the first digital watermark includes a first signature value.

In step N2, the second communication party obtains a first authentication message, where the first authentication message includes first fingerprint information of the first media data.

In step N3, the second communication party verifies the first signature value based on a target key and the first authentication message, to determine authenticity of the first media data.

When the method is specifically used to implement the embodiment shown in the method 900, the first communication party may be, for example, a communication party 1, the second communication party may be, for example, a communication party 2, the first media data may be, for example, media data 1, the second media data may be, for example, media data 2, the first fingerprint information may be, for example, fingerprint information 2, the first digital watermark may be, for example, a digital watermark 1, the first authentication message may be, an authentication message 2, and the first signature value may be, for example, a signature value 1.

Optionally, the target key is a public key held by the first communication party; the target key is a session key obtained through negotiation between the first communication party and the second communication party; or the target key is a shared key of a group to which the first communication party and the second communication party belong, where the shared key is obtained through negotiation among a plurality of communication parties in the group.

Optionally, the first digital watermark further includes authentication attribute information, and the first authentication message further includes the authentication attribute information.

Optionally, the method further includes: The second communication party receives third media data sent by the first communication party, where the third media data is received after the second media data, a second digital watermark is embedded into the third media data, and the second digital watermark includes a second signature value. The second communication party obtains a second authentication message, where the second authentication message includes second fingerprint information of the second media data. The second communication party verifies the second signature value based on the target key and the second authentication message, to determine authenticity of the second media data. When the method is specifically used to implement the embodiment shown in the method 900, the second fingerprint information may be, for example, fingerprint information 4, the second digital watermark may be, for example, a digital watermark 2, the second authentication message may be, for example, an authentication message 4, the second signature value may be, for example, a signature value 2, and the third media data may be, for example, media data 3.

Optionally, the first media data and the second media data are audio data, video data, or file data.

The following describes an example of a software apparatus in embodiments of this application.

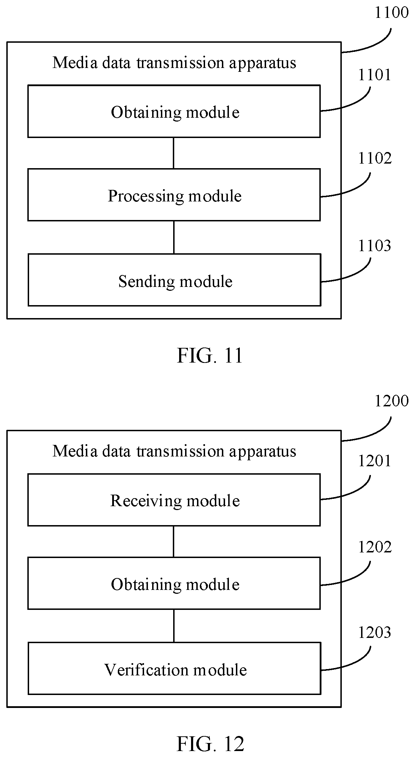

For another example, FIG. 11 is a diagram of a structure of a media data transmission apparatus according to an embodiment of this application. The media data transmission apparatus is used in a first communication party. As shown in FIG. 11, the media data transmission apparatus 1100 includes but is not limited to an obtaining module 1101, a processing module 1102, and a sending module 1103.

The obtaining module 1101 is configured to obtain first fingerprint information of first media data. The processing module 1102 is configured to generate a first digital watermark based on the first fingerprint information, where the first digital watermark includes a first signature value obtained by the first communication party by signing a first authentication message with a target key, and the first authentication message includes the first fingerprint information. The sending module 1103 is configured to send the first media data and second media data to a second communication party, where the first digital watermark is embedded into the second media data, and the second media data is sent after the first media data.

Optionally, the target key is a private key held by the first communication party; the target key is a session key obtained through negotiation between the first communication party and the second communication party; or the target key is a shared key of a group to which the first communication party and the second communication party belong, where the shared key is obtained through negotiation among a plurality of communication parties in the group.

Optionally, the first media data is in a first media frame, the second media data is in a second media frame, and the second media frame is a media frame immediately following the first media frame.

Optionally, the first authentication message further includes authentication attribute information, and the first digital watermark includes the authentication attribute information and the first signature value.

Optionally, the processing module 1102 is further configured to: generate a derived key by using a key derivation function and based on the shared key of the group to which the first communication party and the second communication party belong, an identity of the first communication party, and an identity of the second communication party, where the shared key is obtained through negotiation among the plurality of communication parties in the group; and use, as the authentication attribute information, a hash value obtained by computing a plurality of identity public keys using the derived key, where the plurality of identity public keys include an identity public key of the first communication party and an identity public key of the second communication party.

Optionally, the obtaining module 1101 is further configured to obtain second fingerprint information of the second media data. The processing module 1102 is further configured to generate a second digital watermark based on the second fingerprint information, where the second digital watermark includes a second signature value obtained by the first communication party by signing a second authentication message with the target key, and the second authentication message includes the second fingerprint information. The sending module 1103 is further configured to: after sending the second media data to the second communication party, send third media data to the second communication party, where the second digital watermark is embedded into the third media data.

Optionally, the first media data and the second media data are audio data, video data, or file data.

For another example, FIG. 12 is a diagram of a structure of another media data transmission apparatus according to an embodiment of this application. The media data transmission apparatus is used in a second communication party. As shown in FIG. 12, the media data transmission apparatus 1200 includes but is not limited to: a receiving module 1201, an obtaining module 1202, and a verification module 1203.

The receiving module 1201 is configured to receive first media data and second media data that are sent by a first communication party, where the second media data is received after the first media data, a first digital watermark is embedded into the second media data, and the first digital watermark includes a first signature value. The obtaining module 1202 is configured to obtain a first authentication message, where the first authentication message includes first fingerprint information of the first media data. The verification module 1203 is configured to verify the first signature value based on a target key and the first authentication message, to determine authenticity of the first media data.

Optionally, the target key is a public key held by the first communication party; the target key is a session key obtained through negotiation between the first communication party and the second communication party; or the target key is a shared key of a group to which the first communication party and the second communication party belong, where the shared key is obtained through negotiation among a plurality of communication parties in the group.

Optionally, the first digital watermark further includes authentication attribute information, and the first authentication message further includes the authentication attribute information.

Optionally, the receiving module 1201 is further configured to receive third media data sent by the first communication party, where the third media data is received after the second media data, a second digital watermark is embedded into the third media data, and the second digital watermark includes a second signature value. The obtaining module 1202 is further configured to obtain a second authentication message, where the second authentication message includes second fingerprint information of the second media data. The verification module 1203 is further configured to verify the second signature value based on the target key and the second authentication message, to determine authenticity of the second media data.

Optionally, the first media data and the second media data are audio data, video data, or file data.

The following describes an example of a hardware apparatus in embodiments of this application.

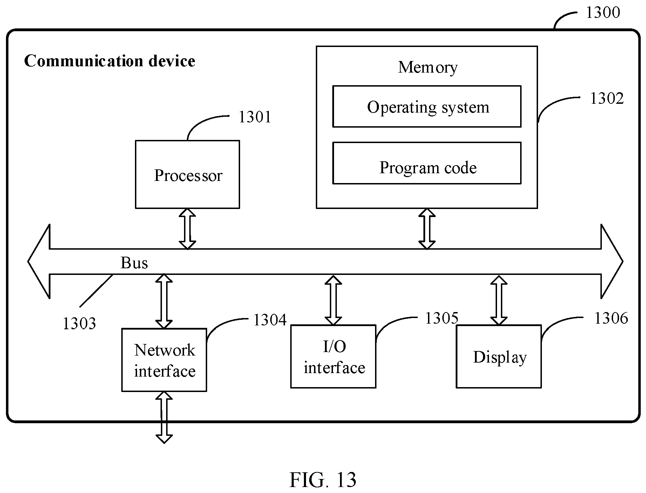

For example, FIG. 13 is a diagram of a hardware structure of a communication device according to an embodiment of this application. The communication device may be a device of any communication party in the foregoing embodiments, for example, may be a conference terminal. As shown in FIG. 13, the communication device 1300 includes a processor 1301 and a memory 1302. The memory 1301 and the memory 1302 are connected through a bus 1303. In FIG. 13, an example in which the processor 1301 and the memory 1302 are independent of each other is used for description. Optionally, the processor 1301 and the memory 1302 are integrated together. Optionally, with reference to FIG. 6, the communication device 1300 in FIG. 13 may be any conference terminal shown in FIG. 6.

The memory 1302 is configured to store a computer program, and the computer program includes an operating system and program code. The memory 1302 is a storage medium of various types, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 1301 is a general-purpose processor or a dedicated processor. The processor 1301 may be a single-core processor or a multi-core processor. The processor 1301 includes at least one circuit, to perform an action performed by the communication party 1 or the communication party 2 in the method 900 provided in embodiments of this application.

Optionally, the communication device 1300 further includes a network interface 1304, and the network interface 1304 is connected to the processor 1301 and the memory 1302 through the bus 1303. The network interface 1304 can implement communication between the communication device 1300 and another device. For example, the processor 1301 can interact with the another device through the network interface 1304, for example, communicate with an MCU through the network interface 1304.

Optionally, the communication device 1300 further includes an input/output (input/output, I/O) interface 1305. The I/O interface 1305 is connected to the processor 1301 and the memory 1302 through the bus 1303. The processor 1301 can receive an input command, data, or the like through the I/O interface 1305. The I/O interface 1305 is used by the communication device 1300 to connect to input devices. The input devices are, for example, a keyboard and a mouse. Optionally, in some possible scenarios, the network interface 1304 and the I/O interface 1305 are collectively referred to as a communication interface.

Optionally, the communication device 1300 further includes a display 1306, and the display 1306 is connected to the processor 1301 and the memory 1302 through the bus 1303. The display 1306 can be configured to display an intermediate result, a final result, and/or the like generated by the processor 1301 when performing the foregoing method. In a possible implementation, the display 1306 is a touchscreen, to provide a human-computer interaction interface.

The bus 1303 is any type of communication bus configured to implement interconnection among internal components of the communication device 1300, for example, a system bus. In this embodiment of this application, an example in which the foregoing internal components of the communication device 1300 are interconnected through the bus 1303 is used for description. Optionally, the foregoing internal components of the communication device 1300 are communicatively connected to each other in a connection manner other than the bus 1303. For example, the foregoing internal components of the communication device 1300 are interconnected through a logic interface inside the communication device 1300.

The foregoing components may be separately disposed on chips that are independent of each other, or at least some or all of the components may be disposed on a same chip. Whether the components are independently disposed on different chips or are integrated and disposed on one or more chips usually depends on a requirement of product design. Embodiments of this application impose no limitation on specific implementations of the foregoing components.

The communication device 1300 shown in FIG. 13 is merely an example. During implementation, the communication device 1300 may further include other components, which are not enumerated one by one in this specification. The communication device 1300 shown in FIG. 13 may implement media data transmission by performing all or some steps of the method provided in the foregoing embodiments.

The following describes an example of a system in embodiments of this application.

An embodiment of this application further provides a media data transmission system, including a first communication party and a second communication party. The first communication party is configured to perform the steps performed by the communication party 1 in the foregoing method 900, for example, perform step 901 to step 903. The second communication party is configured to perform the steps performed by the communication party 2 in the foregoing method 900, for example, perform step 904 and step 905.

Optionally, the media data transmission system may be a conference system, for example, an audio and video conference system or a cloud service conference system. Both the first communication party and the second communication party are conference participants.

An embodiment of this application further provides a computer-readable storage medium. The computer-readable storage medium stores instructions. When the instructions are executed by a processor, the steps performed by the communication party 1 or the steps performed by the communication party 2 in the foregoing method 900 are implemented.

An embodiment of this application further provides a computer program product, including a computer program. When the computer program is executed by a processor, the steps performed by the communication party 1 or the steps performed by the communication party 2 in the foregoing method 900 are implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but shall not be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to information about user equipment, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A media data transmission method, wherein the method comprises:
obtaining, by a first communication party, first fingerprint information of first media data;
generating, by the first communication party, a first digital watermark based on the first fingerprint information, wherein the first digital watermark comprises a first signature value obtained by the first communication party by signing a first authentication message with a target key, and the first authentication message comprises the first fingerprint information; and
sending, by the first communication party, the first media data and second media data to a second communication party, wherein the first digital watermark is embedded into the second media data, and the second media data is sent after the first media data.

2. The method according to claim 1, wherein the target key is a private key held by the first communication party;
the target key is a session key obtained through negotiation between the first communication party and the second communication party; or
the target key is a shared key of a group to which the first communication party and the second communication party belong, wherein the shared key is obtained through negotiation among a plurality of communication parties in the group.

3. The method according to claim 1 or 2, wherein the first media data is in a first media frame, the second media data is in a second media frame, and the second media frame is a media frame immediately following the first media frame.

4. The method according to any one of claims 1 to 3, wherein the first authentication message further comprises authentication attribute information, and the first digital watermark comprises the authentication attribute information and the first signature value.

5. The method according to claim 4, wherein the method further comprises:
generating, by the first communication party, a derived key by using a key derivation function and based on the shared key of the group to which the first communication party and the second communication party belong, an identity of the first communication party, and an identity of the second communication party, wherein the shared key is obtained through negotiation among the plurality of communication parties in the group; and
using, by the first communication party as the authentication attribute information, a hash value obtained by computing a plurality of identity public keys using the derived key, wherein the plurality of identity public keys comprise an identity public key of the first communication party and an identity public key of the second communication party.

6. The method according to any one of claims 1 to 5, wherein the method further comprises:
obtaining, by the first communication party, second fingerprint information of the second media data;
generating, by the first communication party, a second digital watermark based on the second fingerprint information, wherein the second digital watermark comprises a second signature value obtained by the first communication party by signing a second authentication message with the target key, and the second authentication message comprises the second fingerprint information; and
after sending the second media data to the second communication party, sending, by the first communication party, third media data to the second communication party, wherein the second digital watermark is embedded into the third media data.

7. The method according to any one of claims 1 to 6, wherein the first media data and the second media data are audio data, video data, or file data.

8. A media data transmission method, wherein the method comprises:
receiving, by a second communication party, first media data and second media data that are sent by a first communication party, wherein the second media data is received after the first media data, a first digital watermark is embedded into the second media data, and the first digital watermark comprises a first signature value;
obtaining, by the second communication party, a first authentication message, wherein the first authentication message comprises first fingerprint information of the first media data; and
verifying, by the second communication party, the first signature value based on a target key and the first authentication message, to determine authenticity of the first media data.

9. The method according to claim 8, wherein the target key is a public key held by the first communication party;
the target key is a session key obtained through negotiation between the first communication party and the second communication party; or
the target key is a shared key of a group to which the first communication party and the second communication party belong, wherein the shared key is obtained through negotiation among a plurality of communication parties in the group.

10. The method according to claim 8 or 9, wherein the first digital watermark further comprises authentication attribute information, and the first authentication message further comprises the authentication attribute information.

11. The method according to any one of claims 8 to 10, wherein the method further comprises:
receiving, by the second communication party, third media data sent by the first communication party, wherein the third media data is received after the second media data, a second digital watermark is embedded into the third media data, and the second digital watermark comprises a second signature value;
obtaining, by the second communication party, a second authentication message, wherein the second authentication message comprises second fingerprint information of the second media data; and
verifying, by the second communication party, the second signature value based on the target key and the second authentication message, to determine authenticity of the second media data.

12. The method according to any one of claims 8 to 11, wherein the first media data and the second media data are audio data, video data, or file data.

13. A media data transmission apparatus, used in a first communication party, wherein the apparatus comprises:
an obtaining module, configured to obtain first fingerprint information of first media data;
a processing module, configured to generate a first digital watermark based on the first fingerprint information, wherein the first digital watermark comprises a first signature value obtained by the first communication party by signing a first authentication message with a target key, and the first authentication message comprises the first fingerprint information; and
a sending module, configured to send the first media data and second media data to a second communication party, wherein the first digital watermark is embedded into the second media data, and the second media data is sent after the first media data.

14. The apparatus according to claim 13, wherein the target key is a private key held by the first communication party;
the target key is a session key obtained through negotiation between the first communication party and the second communication party; or
the target key is a shared key of a group to which the first communication party and the second communication party belong, wherein the shared key is obtained through negotiation among a plurality of communication parties in the group.

15. The apparatus according to claim 13 or 14, wherein the first media data is in a first media frame, the second media data is in a second media frame, and the second media frame is a media frame immediately following the first media frame.

16. The apparatus according to any one of claims 13 to 15, wherein the first authentication message further comprises authentication attribute information, and the first digital watermark comprises the authentication attribute information and the first signature value.

17. The apparatus according to claim 16, wherein the processing module is further configured to:
generate a derived key by using a key derivation function and based on the shared key of the group to which the first communication party and the second communication party belong, an identity of the first communication party, and an identity of the second communication party, wherein the shared key is obtained through negotiation among the plurality of communication parties in the group; and
use, as the authentication attribute information, a hash value obtained by computing a plurality of identity public keys using the derived key, wherein the plurality of identity public keys comprise an identity public key of the first communication party and an identity public key of the second communication party.

18. The apparatus according to any one of claims 13 to 17, wherein
the obtaining module is further configured to obtain second fingerprint information of the second media data;
the processing module is further configured to generate a second digital watermark based on the second fingerprint information, wherein the second digital watermark comprises a second signature value obtained by the first communication party by signing a second authentication message with the target key, and the second authentication message comprises the second fingerprint information; and
the sending module is further configured to: after sending the second media data to the second communication party, send third media data to the second communication party, wherein the second digital watermark is embedded into the third media data.

19. The apparatus according to any one of claims 13 to 18, wherein the first media data and the second media data are audio data, video data, or file data.

20. A media data transmission apparatus, used in a second communication party, wherein the apparatus comprises:
a receiving module, configured to receive first media data and second media data that are sent by a first communication party, wherein the second media data is received after the first media data, a first digital watermark is embedded into the second media data, and the first digital watermark comprises a first signature value;
an obtaining module, configured to obtain a first authentication message, wherein the first authentication message comprises first fingerprint information of the first media data; and
a verification module, configured to verify the first signature value based on a target key and the first authentication message, to determine authenticity of the first media data.

21. The apparatus according to claim 20, wherein the target key is a public key held by the first communication party;
the target key is a session key obtained through negotiation between the first communication party and the second communication party; or
the target key is a shared key of a group to which the first communication party and the second communication party belong, wherein the shared key is obtained through negotiation among a plurality of communication parties in the group.

22. The apparatus according to claim 20 or 21, wherein the first digital watermark further comprises authentication attribute information, and the first authentication message further comprises the authentication attribute information.

23. The apparatus according to any one of claims 20 to 22, wherein
the receiving module is further configured to receive third media data sent by the first communication party, wherein the third media data is received after the second media data, a second digital watermark is embedded into the third media data, and the second digital watermark comprises a second signature value;
the obtaining module is further configured to obtain a second authentication message, wherein the second authentication message comprises second fingerprint information of the second media data; and
the verification module is further configured to verify the second signature value based on the target key and the second authentication message, to determine authenticity of the second media data.

24. The apparatus according to any one of claims 20 to 23, wherein the first media data and the second media data are audio data, video data, or file data.

25. A media data transmission system, comprising a first communication party and a second communication party, wherein the first communication party is configured to perform the method according to any one of claims 1 to 7, and the second communication party is configured to perform the method according to any one of claims 8 to 12.

26. The system according to claim 25, wherein both the first communication party and the second communication party are conference participants.

27. A communication device, comprising a processor and a memory, wherein
the memory is configured to store a computer program, and the computer program comprises program instructions; and
the processor is configured to invoke the computer program, to implement the method according to any one of claims 1 to 12.

28. A computer-readable storage medium, wherein the computer-readable storage medium stores instructions; and when the instructions are executed by a processor, the method according to any one of claims 1 to 12 is implemented.

29. A computer program product, comprising a computer program, wherein when the computer program is executed by a processor, the method according to any one of claims 1 to 12 is implemented.
